# FASCICULE DE BREVET EUROPEEN

(11) **EP 0 564 311 B1**
(45) Date de publication et mention de la délivrance du brevet: **16.10.1996**
(21) Numéro de dépôt: 93400469.8
(22) Date de dépôt: 24.02.1993
(51) Int. Cl.: G09F 9/30, G06F 3/147

(54) **Dispositif d'affichage**
Anzeigevorrichtung
Display system

(30) Priorité: 27.02.1992 FR 9202311
(43) Date de publication de la demande: 06.10.1993
(73) Titulaire: SECURITE ET SIGNALISATION, F-37002 Tours Cédex (FR)
(72) Inventeur: Migny, Philippe, F-37230 Fondettes (FR)
(74) Mandataire: Hasenrader, Hubert

(56) Documents cités:
- US-A- 4 299 447
- US-A- 4 825 201

## Description

La présente invention se rapporte à un dispositif d'affichage lumineux à message variable sous forme de panneau, comprenant plusieurs sous-ensembles juxtaposés d'affichage par faisceau de fibres optiques comportant chacun au moins une source de lumière, comme décrit par exemple dans la demande FR-A-2 535 882.

On sait qu'il existe plusieurs technologies pour réaliser des panneaux à messages alphanumériques variables, destinés notamment à l'affichage routier ou publicitaire. Ces panneaux sont souvent réalisés par assemblage de modules élémentaires ou sous-ensembles qui sont constitués d'une partie de l'écran principal et d'un dispositif de création d'image. Les panneaux à fibres optiques permettent :
- d'afficher plusieurs messages ou symboles préétablis de formes et de couleurs diverses ;
- de clignoter à une fréquence réglable et d'éveiller ainsi la vigilance ;
- de posséder une luminance élevée, dans l'axe d'observation, et ainsi de rester visibles même dans le cas de conditions extérieures défavorables, pour une consommation électrique réduite.

Ce dispositif peut être de type électro-mécanique avec par exemple des occulteurs associés à une ou plusieurs fibres optiques pour chaque point ou pixel de l'écran.

Quelque soit le type d'éclairage, les sources de lumière ont toujours l'inconvénient de présenter une forte dispersion dans leur performance. Les panneaux qui comprennent plusieurs sources de lumière manquent ainsi d'homogénéité dans l'affichage des messages, les sous-ensembles ne pouvant restituer chacun la même luminosité. De plus, les sources de lumière telles que par exemple des lampes à arc, aux halogénures, ou laser, se dégradent au cours du temps, et souvent de façon différente dans un même lot de sources. Il en résulte que les différences de luminosité entre sous-ensembles d'un même panneau ne peuvent que s'accentuer au cours de la durée de vie des sources lumineuses.

La présente invention a pour objet un dispositif d'affichage lumineux à message variable sous forme de panneau, comprenant n sous-ensembles juxtaposés, d'affichage par faisceau de fibres optiques, comportant chacun au moins une source de lumière, permettant de pallier les inconvénients mentionnés ci-dessus. Il est caractérisé en ce qu'il comprend en outre :
- un circuit de commande principal pour élaborer une consigne d'intensité lumineuse,
- n circuits de commande secondaires, chacun étant associé à un des n sous-ensembles d'affichage, chaque circuit de commande secondaire comportant des moyens pour recevoir ladite consigne et des moyens de contrôle de la ou des sources lumineuses du sous-ensemble associé pour que chaque intensité lumineuse émise corresponde à ladite consigne d'intensité lumineuse,

les moyens de contrôle présentés par chaque circuit de commande secondaire comprenant des moyens de détection directe de chaque intensité lumineuse émise par la ou les sources lumineuses associées, des moyens pour comparer chaque intensité lumineuse à ladite consigne, et des moyens pour commander l'alimentation de la ou des sources lumineuses associées en fonction du résultat de la comparaison,

les moyens de détection directe de chaque intensité lumineuse comprenant une ou plusieurs fibres du faisceau des fibres optiques reliées à un dispositif de conversion photo-électrique.

Grâce à cette conception, une action locale directement au niveau de chaque sous-ensemble, permet d'une part une gestion de la luminosité de l'ensemble du dispositif d'affichage, et d'autre part de garantir l'homogénéité entre tous les sous-ensembles.

Les avantageuses dispositions suivantes sont en outre de préférence adoptées :
le circuit de commande principal est relié par un réseau de communication externe à un système de traitement d'informations pour élaborer la consigne d'intensité lumineuse,
le circuit de commande principal est relié à au moins un capteur externe de mesure de l'éclairement dans l'environnement du dispositif d'affichage, pour élaborer la consigne d'intensité lumineuse,
chaque circuit de commande secondaire comporte un moyen de renvoi, au circuit de commande principal, d'informations sur le fonctionnement de la ou des sources de lumière associées,
chaque circuit de commande secondaire comporte en outre un moyen pour commander l'affichage de la matrice formée par le faisceau de fibres optiques,

L'invention sera mieux comprise, et d'autres caractéristiques apparaîtront au cours de la description suivante d'un exemple de réalisation, en référence aux dessins annexés dans lesquels :

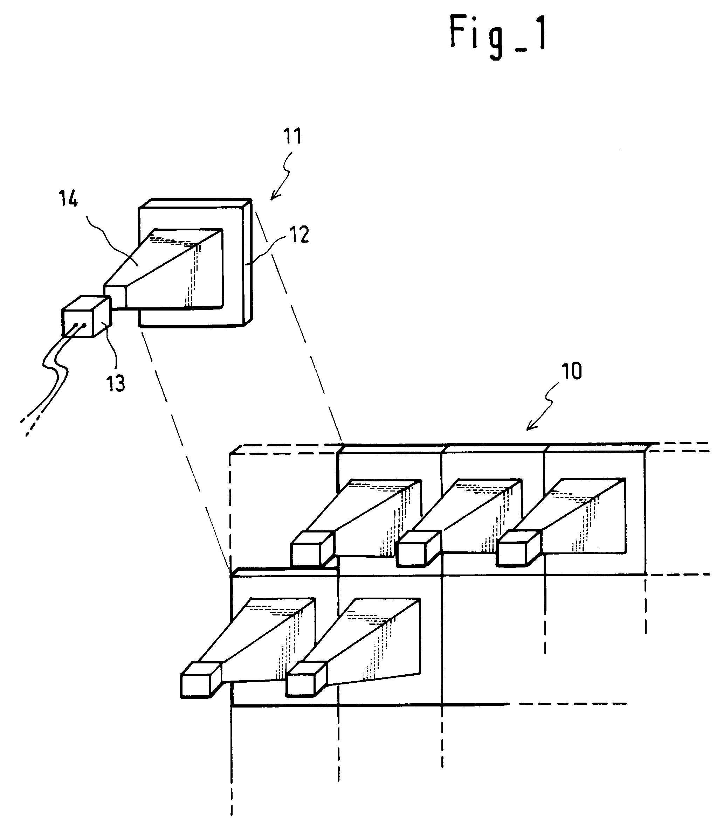

- la figure 1 est une vue schématique de l'assemblage d'un dispositif d'affichage selon l'état de la technique,
- la figure 2 représente un sous-ensemble d'affichage et le moyen de commande secondaire associé de l'invention,
- la figure 3 représente le réseau de communication et de traitement d'informations d'un dispositif selon l'invention,
- la figure 4 est un diagramme représentant le fonctionnement d'un moyen de commande secondaire selon l'invention.

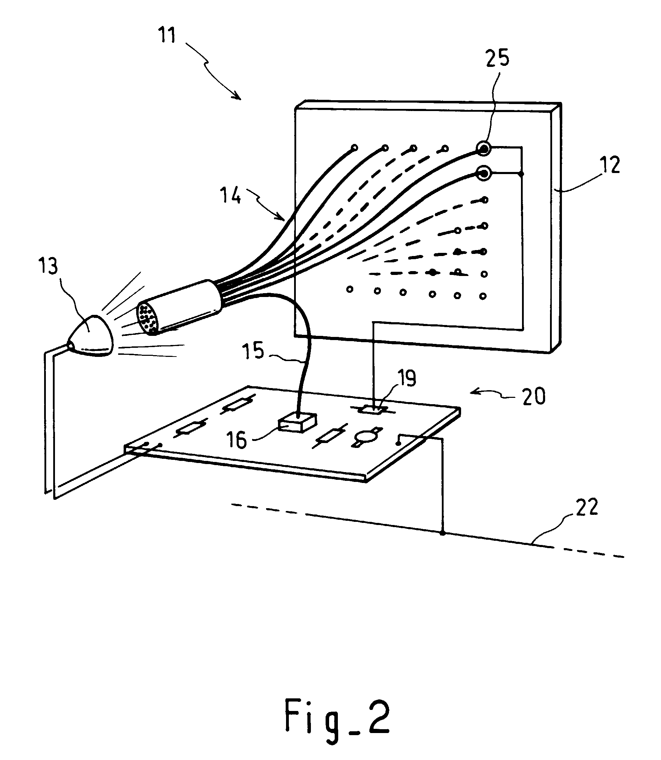

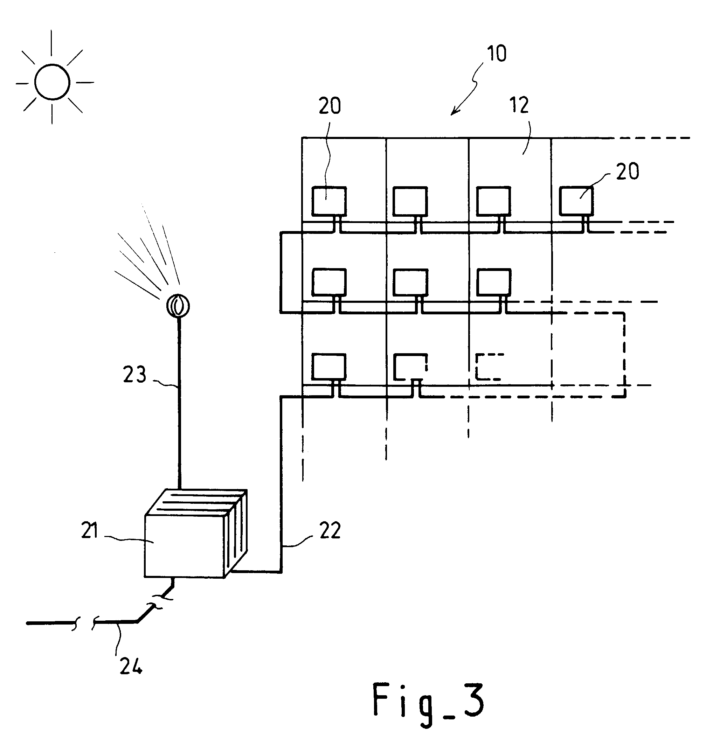

Tel que représenté aux figures 2 et 3, le dispositif d'affichage résulte de l'assemblage de n sous-ensembles d'affichage 11 qui comprennent une partie 12 de l'écran principal 10, et forme un panneau à message variable. Une consigne numérisée d'intensité lumineuse est communiquée par un circuit de commande principal 21, ou unité-maître, à n circuits de commande secondaires 20, ou unités-esclave, chacun étant associé à un des n sous-ensembles d'affichage 11 qui constituent le panneau.

Le circuit de commande principal 21 est constitué d'une carte électronique ou d'un ensemble de cartes, suivant la taille et la complexité du panneau. Il est connecté à l'ensemble des circuits de commande secondaires 20 par un réseau de type bus 22 qui véhicule la consigne numérisée et peut gérer un grand nombre de niveaux de luminosité par exemple en fonction de l'utilisation du panneau, de la position du panneau par rapport à une source lumineuse environnante telle que le soleil ou des projecteurs, en fonction de l'éclairement ambiant de jour, de nuit, d'intérieur ou d'extérieur, ou même en fonction de l'inclinaison du soleil sur l'horizon.

Chaque circuit de commande secondaire 20 est implanté sur un circuit imprimé et permet l'alimentation d'une ou de plusieurs sources lumineuses 13 élémentaires, correspondant au besoin en lumière du plus petit sous-ensemble 11. Cette alimentation peut être par exemple du type continue, ou à découpage.

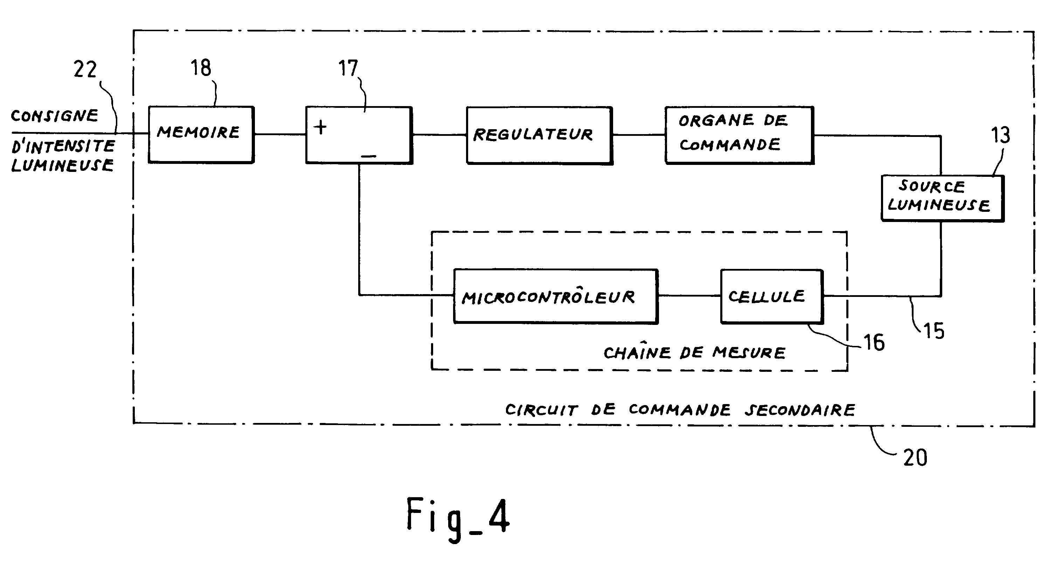

Tel que représenté à la figure 4, chaque circuit de commande secondaire 20 comporte un moyen pour recevoir les consignes d'intensité lumineuse, tels qu'une mémoire 18, et des moyens de contrôle de la source lumineuse 13.

Les moyens de contrôle sont constitués d'une part par des moyens de détection directe de l'intensité lumineuse de la source de lumière 13, comprenant une ou plusieurs fibres optiques 15 reliées à un dispositif de conversion photo-électrique 16 tel que par exemple une cellule à semi-conducteur ou une photo-résistance. Cette cellule a été choisie de manière à posséder une réponse spectrale se rapprochant le plus possible de celle de l'oeil humain.

Les moyens de contrôle sont constitués d'autre part par des moyens pour comparer l'intensité lumineuse de chaque source 13 à la consigne lumineuse. La grandeur optique recueillie par la cellule est convertie en grandeur électrique analogique puis en une grandeur numérique pouvant être traitée par un micro-contrôleur. L'information une fois convertie peut être comparée électroniquement par un comparateur 17 à des valeurs stockées en mémoire 18 dans le circuit de commande secondaire 20.

Les moyens de contrôle sont constitués enfin par des moyens pour commander l'alimentation de la source lumineuse 13 en fonction du résultat de la comparaison qui, suivant un procédé de contre-réaction ajustent la tension électrique à appliquer à la source de lumière 13 pour obtenir le niveau de luminosité souhaité, tout en tenant compte des performances intrinsèques du circuit de commande secondaire 20.

Grâce au procédé de contre-réaction avec chaîne de mesure, régulateur, et organe de commande, le circuit de commande principal 21 ne se soucie donc jamais directement des valeurs de tensions électriques appliquées aux sources lumineuses 13, cette tâche étant entièrement assurée par les circuits de commande secondaires 20.

Cependant chaque circuit de commande secondaire 20 comporte un moyen de renvoi d'information au circuit de commande principal 21 en cas de défaillance d'une source de lumière 13, ou en cas d'impossibilité d'atteindre le niveau de luminosité demandé. Dans cette hypothèse, le circuit de commande principal 21 qui peut localiser le circuit de commande secondaire 20 en difficulté, grâce à un système d'adressage par le bus de communication interne 22, prend la décision pour remédier à la défaillance, comme par exemple :
- alimenter une seconde source de lumière 13, dite source de secours, qui est déjà connectée au circuit de commande secondaire 20 défaillant,
- diminuer d'un ou de plusieurs niveaux la luminosité de l'ensemble du panneau 10 pour maintenir l'homogénéité globale de celui-ci, lorsque la défaillance n'est qu'une dégradation partielle de la ou des sources de lumière 13 due à un vieillissement normal,
- provoquer l'extinction générale du panneau si la dégradation d'un ou de plusieurs sous-ensembles 11 est telle que cela nuit de façon trop importante à la qualité de l'information devant apparaître sur le panneau 10.

C'est par l'intermédiaire d'un logiciel approprié que ces quelques alternatives seront gérées par le circuit de commande principal 21.

Le niveau de luminosité peut être imposé à distance, par un système informatique externe, dans le cas où le panneau est relié à un réseau de communication 24, et éventuellement à d'autres panneaux. Dans ce cas, le circuit de commande principal 21 peut aussi rendre compte des défaillances au système informatique externe.

Préférentiellement, la valeur de l'éclairement ambiant, propre à l'environnement du panneau 10, est communiquée au circuit de commande principal 21 par des capteurs extérieurs 23 numériques ou analogiques, comme par exemple des cellules photo-électriques, qui lui sont reliés directement. Le circuit de commande principal 21 établit une correspondance entre cette valeur d'éclairement ambiant et le niveau de luminosité idéal pour le panneau, en faisant appel à des valeurs pré-établies et stockées dans sa mémoire électronique.

En variante, chaque circuit de commande secondaire 20 comporte en outre un moyen pour commander l'affichage 19 de la matrice formée par le faisceau de fibres optiques 14. Dans une configuration préférentielle, des dispositifs d'occultation électromécaniques 25 sont interposés sur le chemin de la lumière entre la source lumineuse et le devant de la matrice. Chaque dispositif d'occultation 25 comporte des disques comprenant différents secteurs d'occultation et est entraîné en rotation par un moteur rotatif à deux positions d'équilibre stable. Dans d'autres configurations, le dispositif d'occultation 25 pourra être du type électro-optique avec par exemple des matrices de cellules à cristaux liquides, ou du type actionneur à l'état solide comme des micro-structures obtenues par usinage de substrat de semi-conducteurs. L'ensemble des informations participant à cette opération d'affichage est émis par le circuit de commande principal 21, qui assure alors aussi la fonction de synchronisation des informations à destination de l'ensemble des circuits de commande secondaires 20.

Les modes de réalisation précédemment décrits peuvent subir un certain nombre de modifications sans que l'on ne sorte pour autant du cadre de protection défini par les revendications annexées.

## Revendications

1. Dispositif d'affichage lumineux à message variable sous forme de panneau (10), comprenant n sous-ensembles (11) juxtaposés, d'affichage par faisceau de fibres optiques (14), comportant chacun au moins une source de lumière (13), caractérisé en ce qu'il comprend en outre :
- un circuit de commande principal (21) pour élaborer une consigne d'intensité lumineuse,
- n circuits de commande secondaires (20), chacun étant associé à un des n sous-ensembles d'affichage (11), chaque circuit de commande secondaire (20) comportant des moyens pour recevoir (18) ladite consigne et des moyens de contrôle de la ou des sources lumineuses (13) du sous-ensemble (11) associé pour que chaque intensité lumineuse émise corresponde à ladite consigne d'intensité lumineuse,
les moyens de contrôle présentés par chaque circuit de commande secondaire (20) comprenant des moyens de détection directe (15) de chaque intensité lumineuse émise par la ou les sources lumineuses (13) associées, des moyens pour comparer (17) chaque intensité lumineuse à ladite consigne, et des moyens pour commander l'alimentation de la ou des sources lumineuses (13) associées en fonction du résultat de la comparaison,
les moyens de détection directe de chaque intensité lumineuse comprenant une ou plusieurs fibres (15) du faisceau des fibres optiques (14) reliées à un dispositif de conversion photo-électrique (16).

2. Dispositif d'affichage selon la revendication 1, caractérisé en ce que le circuit de commande principal (21) est relié par un réseau de communication externe (24) à un système de traitement d'informations pour élaborer la consigne d'intensité lumineuse.

3. Dispositif d'affichage selon l'une des revendications précédentes, caractérisé en ce que le circuit de commande principal (21) est relié à au moins un capteur externe de mesure de l'éclairement (23) dans l'environnement du dispositif d'affichage, pour élaborer la consigne d'intensité lumineuse.

4. Dispositif d'affichage selon l'une des revendications précédentes, caractérisé en ce que chaque circuit de commande secondaire (20) comporte un moyen de renvoi, au circuit de commande principal (21), d'informations sur le fonctionnement de la ou des sources de lumière (13) associées.

5. Dispositif d'affichage selon l'une des revendications précédentes, caractérisé en ce que chaque circuit de commande secondaire (20) comporte en outre un moyen pour commander l'affichage (19) de la matrice formée par le faisceau de fibres optiques (14).

## Patentansprüche

1. Leuchtanzeigevorrichtung für veränderbare Nachricht, in Gestalt einer Tafel (10) mit n nebeneinander angeordneten Teilsystemen (11) zum Anzeigen durch ein optisches Faserbündel (14), die je wenigstens eine Lichtquelle (13) aufweisen, dadurch **gekennzeichnet**, daß sie ferner umfaßt:
- eine Hauptsteuerschaltung (21) zum Erstellen einer Soll-Lichtstärke,
- n Sekundärsteuerschaltunqen (20), die je einem der n Anzeigeteilsysteme (11) zugeordnet sind, wobei jede Sekundärsteuerschaltung (20) Einrichtungen (18) zum Empfangen des genannten Sollwertes und Einrichtungen zum Kontrollieren der Lichtquelle(n) (13) des zugeordneten Teilsystems (11) umfaßt, damit jede ausgesandte Lichtstärke der Soll-Lichtstärke entspricht,
wobei die Kontrolleinrichtungen jeder Sekundärsteuerschaltung (20) Einrichtungen (15) zum direkten Erfassen jeder von der/den zugeordneten Lichtquelle(n) (15) ausgesandten Lichtstärke umfassen, Einrichtungen (17) zum Vergleichen jeder Lichtstärke mit dem genannten Sollwert und Einrichtungen zum Steuern der Versorgung der zugeordneten Lichtquelle(n) (13) in Abhängigkeit vom Vergleichsergebnis,
wobei die Einrichtungen zum direkten Erfassen jeder Lichtstärke eine oder mehrere Fasern (15) des optischen Faserbündels (14) aufweist, die mit einer fotoelektrischen Umwandlunqsvorrichtunq (16) verbunden sind.

2. Anzeigevorrichtung nach Anspruch 1,
dadurch **gekennzeichnet,** daß zum Erstellen der Soll-Lichtstärke die Hauptsteuerschaltung (21) durch ein externes Verbindungsnetz (24) mit einer Datenverarbeitungsanlage verbunden ist.

3. Anzeigevorrichtung nach einem der vorhergehenden Ansprüche,
dadurch **gekennzeichnet,** daß
zum Erstellen der Soll-Lichtstärke die Hauptsteuerschaltung (21) mit wenigstens einem externen Beleuchtungsmeßfühler (23) in der Umgebung der Anzeigevorrichtung verbunden ist.

4. Anzeigevorrichtung nach einem der vorhergehenden Ansprüche,
dadurch **gekennzeichnet,** daß
jede Sekundärsteuerschaltung (20) eine Einrichtung zum Zurücksenden von Daten hinsichtlich des Betriebs der zugeordneten Lichtquelle(n) (13) an die Hauptsteuerschaltung (21) aufweist.

5. Anzeigevorrichtung nach einem der vorhergehenden Ansprüche,
dadurch **gekennzeichnet,** daß
jede Sekundärsteuerschaltung (20) ferner eine Einrichtung (19) zum Steuern der Anzeige der vom optischen Faserbündel (14) gebildeten Matrix aufweist.

## Claims

1. Luminous display device in the form of a panel (10) for displaying a variable message, the device comprising n juxtaposed display subassemblies (11) for display by means of bundles of optical fibers (14), each subsequently including at least one light source (13), the device being characterized in that it further comprises:
a main control circuit (21) for generating a light intensity reference,
n secondary control circuits (20), each associated with a respective one of the n display subassemblies (11), each secondary control circuit (20) including means (18) for receiving said reference and means for monitoring the light source(s) (13) of the associated subassembly (11) so that each emitted light intensity corresponds to said reference light intensity,
the monitor means presented by each secondary control circuit (20) comprising means (15) for directly detecting each light intensity emitted by the associated light source(s) (13), means (17) for comparing each light intensity with said reference, and means for controlling the power supply to the associated light source(s) (13) as a function of the result of the comparison,
the means for direct detection of each light intensity comprising one or more fibers (15) of the bundle of optical fibers (14) connected to a photoelectrical converter device (16).

2. Display device according to claim 1, characterized in that the main control circuit (21) is connected by an external communications network (24) to an information processing system for generating the light intensity reference.

3. Display device according to one of the preceding claims, characterized in that the main control circuit (21) is connected to at least one external sensor for measuring the lighting level (23) in the environment of the display device, in order to determine the light intensity reference.

4. Display device according to one of the preceding claims, characterized in that each secondary control circuit (20) includes means for returning information to the main control circuit (21) concerning the operation of the associated light source(s) (13).

5. Display device according to one of the preceding claims, charactierized in that each secondary control circuit (20) includes further means for controlling the display (19) of the matrix formed by the bundle of optical fibers (14).
